# FASCICULE DE BREVET EUROPEEN

(11) **EP 3 139 301 B1**
(45) Date de publication et mention de la délivrance du brevet: **14.11.2018**
(21) Numéro de dépôt: 16187649.5
(22) Date de dépôt: 07.09.2016
(51) Int. Cl.: G06F 21/64

(54) **ARCHITECTURE D'UN COFFRE-FORT NUMÉRIQUE UTILISABLE POUR PRÉSERVER L'INTÉGRITÉ D'OBJETS NUMÉRIQUES DANS LE TEMPS**
ARCHITEKTUR EINES DIGITALEN SAFES FÜR DIE AUFRECHTERHALTUNG DER INTEGRITÄT VON DIGITALEN OBJEKTEN ÜBER ZEIT
DIGITAL SAFE ARCHITECTURE USABLE FOR A NUMERICAL OBJECTS INTEGRITY PROTECTION OVER TIME

(30) Priorité: 07.09.2015 FR 1558286
(43) Date de publication de la demande: 08.03.2017
(73) Titulaire: Docapost DPS, 94220 Charenton le Pont (FR)
(72) Inventeur: LEFEBVRE, Julien, 75012 Paris (FR)
(74) Mandataire: Lavoix

(56) Documents cités:
- NICHOLSON D ET AL: "Beyond OAIS: Towards a reliable and consistent digital preservation implementation framework", DIGITAL SIGNAL PROCESSING, 2009 16TH INTERNATIONAL CONFERENCE ON, IEEE, PISCATAWAY, NJ, USA, 5 juillet 2009 (2009-07-05), pages 1-8, XP031510212, ISBN: 978-1-4244-3297-4
- VIKTOR H L ET AL: "Preserving object-relational databases for the next generations", DIGITAL INFORMATION MANAGEMENT (ICDIM), 2010 FIFTH INTERNATIONAL CONFERENCE ON, IEEE, PISCATAWAY, NJ, USA, 5 juillet 2010 (2010-07-05), pages 11-18, XP031832900, ISBN: 978-1-4244-7572-8
- SANGCHUL SONG, JOSEPH JAJA: "New Techniques for Ensuring the Long Term Integrity of Digital Archives", THE PROCEEDINGS OF THE 8TH ANNUAL INTERNATIONAL DIGITAL GOVERNMENT RESEARCH CONFERENCE, 1 janvier 2007 (2007-01-01), pages 57-65, XP040061141, ISBN: 1-59593-599-1

## Description

La présente invention concerne une architecture d'un coffre-fort numérique utilisable pour préserver l'intégrité d'objets numériques dans le temps.

Plus particulièrement, l'invention se rapporte à une telle architecture comportant des moyens de conservation permettant de conserver des objets numériques et des métadonnées associées à ces objets, et des moyens de calcul permettant de traiter une pluralité de tâches de calcul.

Ces tâches de calcul comprennent des tâches d'exploitation relatives au dépôt, à la conservation et à la reconstitution des objets numériques, et des tâches d'arrière-plan relatives au fonctionnement du coffre-fort.

Il existe dans l'état de la technique, différentes architectures de coffres-forts numériques.

L'objet numérique comprend par exemple un document électronique ou plus globalement, tout autre fichier informatique.

Les coffres-forts permettent de préserver l'intégrité de tels objets numériques dans le temps et sont ainsi utilisables dans nombreux domaines techniques. Parmi ces domaines, on peut notamment citer l'archivage électronique, la gestion de documents électroniques, la sécurité d'objets numériques, etc.

On connait par exemple une architecture d'un coffre-fort numérique qui est décrite dans Nicholson D et al « *Beyond OAIS : Towards a reliable and consistent digital preservation implementation framework* ».

De manière générale, chaque coffre-fort numérique est constitué d'une pluralité de ressources matérielles comprenant notamment un calculateur d'accès au coffre-fort et des moyens de conservation, et d'une pluralité de ressources logicielles pour permettre le fonctionnement du coffre-fort numérique en utilisant les ressources matérielles.

L'objectif principal de ces ressources est de pouvoir restituer un objet numérique tel qu'il a été mis dans le coffre-fort, après une durée de conservation quelconque, et de pouvoir prouver que l'objet numérique n'a pas été modifié durant ce temps de conservation.

Le respect de ces garanties permet notamment d'assurer la valeur probante de l'objet numérique qui devient alors opposable, par exemple, en justice.

Plusieurs textes de référence sont applicables aux coffres-forts numériques.

Parmi ces textes, on peut notamment citer le référentiel FNTC-CFE et la norme AFNOR NF Z42-020:2012-07.

Pour atteindre l'objectif fixé, les architectures existantes mettent en oeuvre un encadrement étroit de la procédure de dépôt d'un objet numérique dans le coffre-fort.

En particulier, une telle procédure de dépôt consiste à recevoir et à vérifier chaque objet numérique à déposer, à créer une preuve de dépôt de cet objet et à mettre l'objet dans les moyens de conservation selon des techniques de conservation prédéterminées.

Cette procédure est mise en oeuvre par le calculateur d'accès au coffre-fort.

Toutefois, avec l'augmentation considérable du nombre de dépôts durant ces dernières années, les performances limitées du calculateur d'accès ne permettent plus d'assurer la mise en oeuvre de cette procédure pour la totalité des dépôts.

Pour pallier ce problème, il a alors été proposé d'augmenter les performances du traitement des dépôts en remplaçant successivement les calculateurs d'accès par des calculateurs de plus en plus performants.

Cependant, cette solution manque de souplesse et présente l'inconvénient de se traduire par des coûts considérables.

La présente invention a pour but de proposer une architecture d'un coffre-fort numérique permettant d'effectuer un relativement grand nombre de dépôts, tout en restant relativement souple et peu onéreuse.

À cet effet, l'invention a pour objet une architecture conforme à la revendication 1.

Suivant d'autres aspects avantageux de l'invention, l'architecture d'un coffre-fort comprend une ou plusieurs des caractéristiques des revendications 2 à 11, prise(s) isolément ou suivant toutes les combinaisons techniquement possibles.

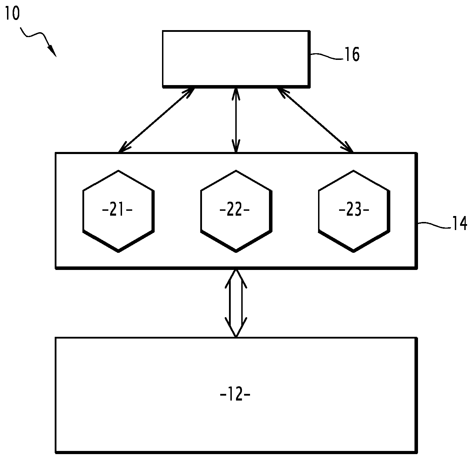

Ces caractéristiques et avantages de l'invention apparaitront à la lecture de la description qui va suivre, donnée uniquement à titre d'exemple non limitatif, et faite en référence à la figure unique illustrant une vue schématique d'une architecture d'un coffre-fort numérique selon l'invention.

On a en effet illustré sur la figure, une architecture d'un coffre-fort numérique désignée par la référence générale 10 sur cette figure.

Le coffre-fort numérique est utilisable pour préserver l'intégrité d'objets numériques dans le temps.

Chaque objet numérique comprend par exemple un document électronique ou tout autre fichier informatique.

Chaque objet numérique est associé à des métadonnées comprenant des données numériques relatives à cet objet.

L'architecture 10 comporte des moyens de conservation des objets numériques, des moyens de calcul permettant de traiter une pluralité de tâches de calcul relatives aux objets numériques et un gestionnaire de ces tâches.

Ces composants de l'architecture 10 sont désignés respectivement par les références 12, 14 et 16 sur la figure.

Les moyens de conservation 12 se présentent par exemple sous la forme d'un ou plusieurs serveurs aptes à stocker de manière sécurisée, les objets numériques et les métadonnées associées à ces objets, selon une technique de stockage appropriée et connue en soi.

Les moyens de calcul 14 sont aptes à traiter une pluralité de tâches de calcul relatives aux objets numériques et au fonctionnement du coffre-fort.

En particulier, les tâches de calcul comprennent des tâches d'exploitation relatives au dépôt, à la conservation et à la reconstitution des objets numériques, et des tâches d'arrière-plan relatives au fonctionnement du coffre-fort.

Chaque tâche d'exploitation est choisie dans le groupe comprenant au moins :
- réception d'un objet numérique à déposer ;
- vérification de chaque objet numérique reçu ;
- génération de métadonnées relatives à chaque objet numérique reçu et formant une preuve de dépôt de cet objet numérique ;
- transmission d'un objet numérique vers les moyens de conservation 12 avec les métadonnées correspondantes ;
- consultation d'un objet numérique ;
- consultation des métadonnées relatives à un objet numérique conservé dans les moyens de conservation ;
- restitution d'un objet numérique ;
- listage des objets numériques conservés dans au moins une partie des moyens de conservation ; et
- suppression d'un objet numérique et des métadonnées correspondant à cet objet numérique.

Chaque tâche d'arrière-plan est choisie dans le groupe comprenant au moins :
- opérations de maintenance du coffre-fort ; et
- traitement de tâches asynchrones.

Selon l'invention, les moyens de calcul 14 sont constitués d'une pluralité de noeuds de calcul distincts.

Chaque noeud de calcul est apte à exécuter au moins certaines tâches de calcul indépendamment des autres noeuds.

Sur la figure, trois noeuds de calcul sont représentés.

Ces noeuds de calcul sont désignés par les références générales 21 à 23.

Toutefois, il doit être compris que l'invention ne se limite pas à l'exemple de réalisation représenté.

Ainsi, le nombre de noeuds est choisi en fonction des performances souhaitées de traitement de dépôts et peut être modifié dynamiquement comme ceci sera expliqué par la suite.

Chaque noeud de calcul 21 à 23 est configuré pour exécuter des tâches d'une même nature ou de natures différentes.

Ainsi, dans l'exemple de la figure, le noeud de calcul 21 est dédié à l'exécution des tâches d'exploitation, le noeud de calcul 22 est dédié à l'exécution des tâches d'arrière-plan et le noeud de calcul 23 est dédié à l'exécution des tâches d'exploitation et d'arrière-plan.

Par ailleurs, chaque noeud de calcul 21 à 23 est réalisé sous la forme d'un calculateur indépendant des autres noeuds de calcul ou sous la forme d'un logiciel mis en oeuvre par un calculateur commun pour plusieurs noeuds.

Dans ce dernier cas, le noeud de calcul est par exemple réalisé sous la forme d'une machine virtuelle.

Ainsi, un tel noeud de calcul peut être ajouté ou supprimé dynamiquement en fonction par exemple de la puissance de calcul nécessaire à l'instant courant.

Le gestionnaire de tâches 16 permet de distribuer les tâches de calcul entre différents noeuds de calcul 21 à 23.

Chaque noeud de calcul 21 à 23 est alors apte à exécuter une ou plusieurs tâches qui lui sont attribuées par le gestionnaire de tâches 16.

Le gestionnaire de tâches 16 est par exemple un calculateur indépendant formant une interface de communication avec le coffre-fort et un centre de gestion du coffre-fort.

Le gestionnaire de tâches 16 est ainsi apte à générer une tâche de calcul relative à un objet numérique ou au fonctionnement du coffre-fort et à attribuer cette tâche de calcul à l'un des noeuds de calcul 21 à 23.

L'attribution des tâches est par exemple effectuée en fonction de la nature de ces tâches et en fonction de la puissance de calcul et de la disponibilité des noeuds de calcul 21 à 23 correspondants.

Ainsi, par exemple, comme le noeud de calcul 21 est dédié à l'exécution des tâches d'exploitation, le gestionnaire de tâches 16 est apte à attribuer uniquement des tâches d'exploitation à ce noeud.

De manière analogue, comme le noeud de calcul 22 est dédié à l'exécution des tâches d'arrière-plan, le gestionnaire de tâches 16 est apte à attribuer uniquement des tâches d'arrière-plan à ce noeud.

Finalement, comme le noeud de calcul 23 est dédié à l'exécution des tâches de natures différentes, le gestionnaire de tâches 16 est apte à attribuer des tâches d'exploitation et des tâches d'arrière-plan.

En outre, le gestionnaire de tâches 16 est apte à vérifier la disponibilité de chaque noeud, et lorsqu'un noeud est indisponible, à générer une alerte correspondante.

Selon une variante de réalisation, le gestionnaire de tâches 16 est apte en outre à commander l'ajout d'un nouveau noeud de calcul ou la suppression d'un noeud de calcul existant, en fonction par exemple du nombre de noeuds de calcul disponibles et du nombre de tâches à effectuer.

Le fonctionnement de l'architecture 10 va désormais être expliqué.

Lorsqu'il est nécessaire par exemple d'ajouter un nouvel objet numérique dans le coffre-fort, le gestionnaire de tâches 16 génère une pluralité de tâches d'exploitation relatives à cet objet.

En particulier, les tâches d'exploitation générées par le gestionnaire de tâches 16 consistent par exemple à recevoir l'objet numérique, à vérifier l'objet numérique, à générer de métadonnées relatives à l'objet numérique et à transmettre l'objet numérique vers les moyens de conservation 12 avec les métadonnées correspondantes.

Puis, le gestionnaire de tâches 16 attribue l'ensemble de ces tâches d'exploitation à l'un des noeuds 21 ou 23 disponibles à l'instant courant.

Lorsqu'aucun des noeuds de calcul 21 et 23 n'est disponible, le gestionnaire de tâches 16 génère une alerte correspondante et le cas échéant, commande dynamiquement l'ajout d'un nouveau noeud de calcul.

Le gestionnaire de tâches 16 peut par ailleurs attribuer des tâches d'arrière-plan aux noeuds de calcul 22 ou 23, lorsque ceci est nécessaire pour maintenir par exemple le fonctionnement du coffre-fort.

Bien entendu, d'autres exemples de fonctionnement et de réalisation de l'architecture 10 sont également possibles.

On conçoit alors que la présente invention présente un certain nombre d'avantages.

En particulier, l'architecture selon l'invention permet de distribuer les tâches de calcul relatives aux objets numériques ou au fonctionnement du coffre-fort entre différents noeuds de calcul en fonction de la puissance de calcul de ces noeuds et de leur disponibilité.

Cette architecture conduit alors à une distribution de performances de calcul entre les différents noeuds et évite l'utilisation d'un seul calculateur d'accès avec des performances limitées comme proposé dans l'état de la technique.

Ainsi, lorsqu'une nécessité d'augmenter les performances de calcul apparait, il suffit d'ajouter un noeud de calcul.

Ceci rend alors la solution proposée plus flexible et moins onéreuse par rapport aux solutions existantes.

## Revendications

1. Architecture (10) d'un coffre-fort numérique utilisable pour préserver l'intégrité d'objets numériques dans le temps, l'architecture (10) comportant des moyens de conservation permettant de conserver des objets numériques et des métadonnées associées à ces objets, et des moyens de calcul (14) permettant de traiter une pluralité de tâches de calcul ;
les tâches de calcul comprenant des tâches d'exploitation relatives au dépôt, à la conservation et à la reconstitution des objets numériques, et des tâches d'arrière-plan relatives au fonctionnement du coffre-fort ;
l'architecture (10) étant **caractérisée :**
- **en ce que** les moyens de calcul (14) sont constitués d'une pluralité de noeuds de calcul (21, 22, 23) distincts, chaque noeud de calcul (21, 22, 23) étant apte à exécuter au moins certaines tâches de calcul indépendamment des autres noeuds de calcul (21, 22, 23) ; et
- **en ce qu'**elle comporte en outre un gestionnaire de tâches (16) permettant de distribuer les tâches de calcul entre différents noeuds de calcul (21, 22, 23), chaque noeud de calcul (21, 22, 23) étant apte à exécuter une ou plusieurs tâches qui lui sont attribuées.

2. Architecture (10) selon la revendication 1, **caractérisée en ce que** les moyens de calcul (14) comprennent au moins un noeud de calcul (21) dédié à l'exécution des tâches d'exploitation.

3. Architecture (10) selon la revendication 1 ou 2, **caractérisée en ce que** les moyens de calcul (14) comprennent au moins un noeud de calcul (22) dédié à l'exécution des tâches d'arrière-plan.

4. Architecture (10) selon l'une quelconque des revendications précédentes, **caractérisée en ce que** les moyens de calcul (14) comprennent au moins un noeud de calcul (23) dédié à l'exécution des tâches d'exploitation et des tâches d'arrière-plan.

5. Architecture (10) selon l'une quelconque des revendications précédentes, **caractérisée en ce que** chaque tâche d'exploitation est choisie dans le groupe comprenant au moins :
- réception d'un objet numérique à déposer ;
- vérification de chaque objet numérique reçu ;
- génération de métadonnées relatives à chaque objet numérique reçu et formant une preuve de dépôt de cet objet numérique ;
- transmission d'un objet numérique vers les moyens de conservation avec les métadonnées correspondantes ;
- consultation d'un objet numérique ;
- consultation des métadonnées relatives à un objet numérique conservé dans les moyens de conservation ;
- restitution d'un objet numérique ;
- listage des objets numériques conservés dans au moins une partie des moyens de conservation ; et
- suppression d'un objet numérique et des métadonnées correspondant à cet objet numérique.

6. Architecture (10) selon l'une quelconque des revendications précédentes, **caractérisée en ce que** chaque tâche d'arrière-plan est choisie dans le groupe comprenant au moins :
- opérations de maintenance du coffre-fort ; et
- traitement de tâches asynchrones.

7. Architecture (10) selon l'une quelconque des revendications précédentes, **caractérisée en ce qu'**au moins un noeud de calcul (21, 22, 23) est réalisé sous la forme d'un calculateur indépendant.

8. Architecture (10) selon l'une quelconque des revendications précédentes, **caractérisée en ce qu'**au moins un noeud de calcul (21, 22, 23) est réalisé sous la forme d'un logiciel indépendant tel qu'une machine virtuelle.

9. Architecture (10) selon la revendication 8, **caractérisée en ce que** le gestionnaire de tâches (16) est apte à ajouter ou à supprimer chaque noeud de calcul (21, 22, 23) réalisé sous la forme d'un logiciel.

10. Architecture (10) selon l'une quelconque des revendications précédentes, **caractérisée en ce que** le gestionnaire de tâches (16) est apte à distribuer les tâches de calcul entre différents noeuds de calcul (21, 22, 23) en fonction de la puissance de calcul de ces noeuds (21, 22, 23).

11. Architecture (10) selon l'une quelconque des revendications précédentes, **caractérisée en ce que** le gestionnaire de tâches (16) est apte à vérifier la disponibilité de chaque noeud de calcul (21, 22, 23), et lorsqu'un noeud de calcul (21, 22, 23) est indisponible, à générer une alerte correspondante.

## Patentansprüche

1. Architektur (10) eines digitalen Safes für die Aufrechterhaltung der Integrität von digitalen Objekten über Zeit, umfassend Speicherungsmittel, die die Speicherung digitaler Objekte und der mit diesen verbundenen Metadaten ermöglichen, sowie Rechenmittel (14), die die Verarbeitung einer Mehrzahl Rechenvorgänge ermöglichen;
wobei die Rechenvorgänge Nutzungsvorgänge umfassen, die die Ablage, Speicherung und Wiederherstellung der digitalen Objekte betreffen, sowie Hintergrundvorgänge, die die Funktionierung des Safes betreffen;
wobei die Architektur (10) **dadurch gekennzeichnet ist, dass**:
- die Rechenmittel (14) aus einer Mehrzahl unterschiedlicher Rechenknoten (21, 22, 23) bestehen, wobei jeder Rechenknoten (21, 22, 23) zur Ausführung mindestens einiger Rechenvorgänge unabhängig von den anderen Rechenknoten (21, 22, 23) geeignet ist; und
- sie ferner einen Task-Manager (16) umfasst, der die Verteilung der Rechenvorgänge über unterschiedliche Rechenknoten (21, 22, 23) ermöglicht, wobei jeder Rechenknoten (21, 22, 23) zur Ausführung mindestens eines ihm zugewiesenen Vorgangs geeignet ist.

2. Architektur (10) nach Anspruch 1, **dadurch gekennzeichnet, dass** die Rechenmittel (14) mindestens einen Rechenknoten (21) umfassen, der für die Ausführung von Nutzungsvorgängen bestimmt ist.

3. Architektur (10) nach Anspruch 1 oder 2, **dadurch gekennzeichnet, dass** die Rechenmittel (14) mindestens einen Rechenknoten (22) umfassen, der für die Ausführung von Hintergrundvorgängen bestimmt ist.

4. Architektur (10) nach einem der vorstehenden Ansprüche, **dadurch gekennzeichnet, dass** die Rechenmittel (14) mindestens einen Rechenknoten (23) umfassen, der für die Ausführung von Nutzungs- und Hintergrundvorgängen bestimmt ist.

5. Architektur (10) nach einem der vorstehenden Ansprüche, **dadurch gekennzeichnet, dass** jeder Nutzungsvorgang aus der Gruppe gewählt ist, die mindestens umfasst:
- Empfangen eines abzulegenden digitalen Objektes;
- Verifizieren jedes empfangenen digitalen Objektes;
- Erzeugen von Metadaten betreffend jedes empfangene digitale Objekt, die einen Ablagenachweis des digitalen Objektes darstellen;
- Übertragen eines digitalen Objektes mit den entsprechenden Metadaten an die Speicherungsmittel;
- Abrufen eines digitalen Objektes;
- Abrufen der Metadaten über ein in den Speicherungsmitteln gespeichertes digitales Objekt;
- Wiederherstellen eines digitalen Objektes;
- Auflisten der in mindestens einem Teil der Speicherungsmittel gespeicherten digitalen Objekte und
- Entfernen eines digitalen Objektes und der diesem Objekt entsprechenden Metadaten.

6. Architektur (10) nach einem der vorstehenden Ansprüche, **dadurch gekennzeichnet, dass** jeder Hintergrundvorgang aus der Gruppe gewählt ist, die mindestens umfasst:
- Vorgänge zur Wartung des Safes und
- Verarbeitung asynchroner Vorgänge.

7. Architektur (10) nach einem der vorstehenden Ansprüche, **dadurch gekennzeichnet, dass** mindestens ein Rechenknoten (21, 22, 23) in Form eines unabhängigen Rechners vorliegt.

8. Architektur (10) nach einem der vorstehenden Ansprüche, **dadurch gekennzeichnet, dass** mindestens ein Rechenknoten (21, 22, 23) in Form einer unabhängigen Software, z.B. einer virtuellen Maschine, vorliegt.

9. Architektur (10) nach Anspruch 8, **dadurch gekennzeichnet, dass** der Task-Manager (16) dazu geeignet ist, jeden Rechenknoten (21, 22, 23), der in Form einer Software vorliegt, hinzuzufügen oder zu entfernen.

10. Architektur (10) nach einem der vorstehenden Ansprüche, **dadurch gekennzeichnet, dass** der Task-Manager (16) dazu geeignet ist, die Rechenvorgänge zwischen unterschiedliche Rechenknoten (21, 22, 23) als Funktion der Rechenleistung der Knoten (21, 22, 23) zu verteilen.

11. Architektur (10) nach einem der vorstehenden Ansprüche, **dadurch gekennzeichnet, dass** der Task-Manager (16) dazu geeignet ist, die Verfügbarkeit jedes Rechenknotens (21, 22, 23) zu prüfen, und eine entsprechende Meldung zu erzeugen, wenn ein Rechenknoten (21, 22, 23) nicht verfügbar ist.

## Claims

1. A digital safe architecture (10) usable to preserve the integrity of digital objects over time, the architecture (10) including preservation units able to preserve digital objects and metadata associated with those objects, and computing units (14) able to process a plurality of computing tasks;
the computing tasks comprising operating tasks relative to the filing, preservation and reconstitution of digital objects, and background tasks relative to the operation of the safe;
the architecture (10) being **characterized in that**:
- the computing units (14) consist of a plurality of separate computing nodes (21, 22, 23), each computing node (21, 22, 23) being able to execute at least certain computing tasks independently of the other computing nodes (21, 22, 23); and
- it further includes a task manager (16) able to distribute the computing tasks between different computing nodes (21, 22, 23), each computing node (21, 22, 23) being able to perform one or more tasks assigned to it.

2. The architecture (10) according to claim 1, **characterized in that** the computing units (14) comprise at least one computing node (21) dedicated to the performance of operating tasks.

3. The architecture (10) according to claim 1 or 2, **characterized in that** the computing units (14) comprise at least one computing node (22) dedicated to the performance of background tasks.

4. The architecture (10) according to any of the preceeding claims, **characterized in that** the computing units (14) comprise at least one computing node (23) dedicated to the performance of operating tasks and background tasks.

5. The architecture (10) according to any of the preceeding claims, **characterized in that** each operating task is chosen from the group comprising :
- reception of a digital object to be filed;
- verification of each received digital object;
- generation of metadata relative to each received digital object and forming proof of filing of that digital object;
- sending of a digital object to the preservation units with the corresponding metadata;
- consultation of a digital object;
- consultation of metadata relative to a digital object preserved in the preservation units;
- retrieval of a digital object;
- listing of the digital objects preserved in at least part of the preservation units; and
- deletion of a digital object and the metadata corresponding to that digital object.

6. The architecture (10) according to any of the preceeding claims, **characterized in that** each background task is chosen from the group comprising :
- safe maintenance operations; and
- asynchronous task processing.

7. The architecture (10) according to any of the preceeding claims, **characterized in that** at least one computing node (21, 22, 23) is produced in the form of an independent computer.

8. The architecture (10) according to any of the preceeding claims, **characterized in that** at least one computing node (21, 22, 23) is produced in the form of an independent software program such as a virtual machine.

9. The architecture (10) according to claim 8, **characterized in that** the task manager (16) is able to add or remove each computing node (21, 22, 23) done in the form of a software program.

10. The architecture (10) according to any of the preceeding claims, wherein the task manager (16) is able to distribute the computing tasks between different computing nodes (21, 22, 23) based on the computing power of those nodes (21, 22, 23).

11. The architecture (10) according to any of the preceeding claims, **characterized in that** the task manager (16) is able to verify the availability of each computing node (21, 22, 23), and when a computing node (21, 22, 23) is unavailable, to generate a corresponding alert.
